# EUROPEAN PATENT APPLICATION

(11) **EP 4 685 093 A1**
(43) Date of publication of application: **28.01.2026**
(21) Application number: 24190769.0
(22) Date of filing: 25.07.2024
(51) Int. Cl.: B65G 67/08, B65G 67/20

(54) **SYSTEM FOR AUTOMATIC LOADING OF POSTAL ITEMS INTO A RACK UNIT OF A DELIVERY VEHICLE AND CORRESPONDING METHOD**

(71) Applicant: BEUMER Group GmbH & Co. KG, 59269 Beckum (DE)
(72) Inventor: BAYEN, Brecht, 3665 As (BE); CALLANNO, Francesco, 3600 Genk (BE); AIELLO, Mariano, 3665 AS (BE); STAUSHOLM MEYER, Stefan, 8883 Gjern (DK); MEYER, Marlon, 33803 Steinhagen (Westfalen) (DE); STAUN, Jørgen, 8382 Vitten (DK)
(74) Representative: Angerhausen, Christoph

(57) **Abstract**

The invention refers to a system for automatic loading of postal items into a rack unit of a delivery vehicle, comprising a sorting conveyor configured for providing a plurality of postal items, e.g. parcels and/or packages, intended for a delivery run of a delivery vehicle; at least one delivery conveyor for delivering the postal items from the sorting conveyor to a handling area of a rack unit configured to be accommodated in a loading space of a delivery vehicle; at least one automatic loading unit configured to load postal items from the handling area into rack unit compartments of the rack unit. The invention further refers to a corresponding method for automatic loading of postal items into a rack unit of a delivery vehicle.

## Description

The present invention refers to a system for automatic loading of postal items into a rack unit of a delivery vehicle and corresponding method.

Current sorting systems in logistics and delivery face significant inefficiencies because delivery personnel often manually load packages into their vans, leading to disorganized and non-sequenced delivery orders. This manual process is labor-intensive and prone to errors, causing delays as drivers struggle to locate the right package at each delivery stop. Without a systematic, sequenced loading approach, packages are not arranged in the order of delivery, resulting in longer delivery times, increased operational costs, and potential customer dissatisfaction. To address these issues, automation in sorting and loading, combined with advanced route optimization technologies, is crucial to enhance efficiency and ensure packages are delivered in the optimal sequence.

The object of the invention is to improve a system for loading delivery vehicles with postal items in such a way that loading is accelerated, the amount of manual handling is reduced, the space utilization of the delivery vehicle is optimized and the risk of damage to the postal items is reduced.

According to the invention, the problem is solved by the features of the independent claims. Further advantageous embodiments are described in the dependent claims.

According to the invention it is proposed to provide a system for automatic loading of postal items into a rack unit of a delivery vehicle, comprising:
a sorting conveyor configured for providing a plurality of postal items, e.g. parcels and/or packages, intended for a delivery run of a delivery vehicle;
at least one delivery conveyor for delivering the postal items from the sorting conveyor to a handling area of a rack unit configured to be accommodated in a loading space of a delivery vehicle;
at least one automatic loading unit configured to load postal items from the handling area into rack unit compartments of the rack unit.

The inventive system has the advantage of significantly reducing the time required to load delivery vans compared to a manual process. Racks preloaded with parcels can be swiftly transferred into the vehicle, minimizing downtime. The automation provides consistent loading speeds and processes, enhancing predictability and planning within delivery operations. The automation further decreases the need for manual handling of postal items, reducing the workforce required for loading operations and allowing human resources to be allocated to more value-added tasks. The automated system can further optimize the use of the available space of the rack unit, utilizing the available space more effectively. This can lead to an increase in the number of parcels per trip. The system further reduces the number of times a package is handled, lowering the risk of damage and ensuring parcels are delivered in better condition.

The rack unit can be dimensioned such that it can be accommodated in the load compartment of a delivery vehicle. The rack unit can have at least one frame which has a plurality of rack unit compartments. The compartments can be of the same size. The compartments can be of different sizes. The compartments can be adjustable in size. The compartments can have different heights and depths. The compartment size can refer to the height and/or the depth and/or the width of a rack unit compartment. The rack unit can have a central free space, which serves as free space for a mail carrier to move around. The rack unit can be designed in such a way that the compartments are accessible, in particular loadable, from the outside of the rack unit. The rack unit can be configured such that it can be transported by means of an AGV or a pallet truck. The rack unit can be supported against the floor by a plurality of rollers, by means of which the rack unit can be moved.

The delivery conveyor can comprise of a plurality of conveyor elements. The conveyor elements can be arranged such the delivery conveyor is configured for distributing the postal items in a first direction towards the handling area and in a second direction perpendicular to the first direction. The delivery conveyor can be arranged such that the postal items are transferred to the automatic loading unit on a level above the rack unit. The sorting conveyor and the delivery conveyor can have an interface for transferring the postal items.

The input side of the delivery conveyor can be arranged on a level below the output end of the sorting conveyor such that postal items ejected by the sorting conveyor can be transferred to the handling area via a ramp.

At least one first automatic loading unit can be arranged on a first longitudinal side of the rack unit and at least one second automatic loading unit can be arranged on the second longitudinal side of the rack unit opposite the first side of the rack unit. The automatic loading units can be arranged to face each other such that they are configured to deliver package units into respective rack unit compartments that comprise a loading opening facing the respective automatic loading unit. The delivery conveyor can be configured to deliver postal items either to the first automatic loading unit or to the second automatic loading unit. The delivery conveyor can have separate conveyor lanes, at least in sections. The delivery conveyor can also have two loading inputs, via which the sorter can either deliver parcels to the lane supplying the first automatic loading unit or to the lane of the delivery conveyor supplying the second automatic loading unit.

The system, in particular the automatic loading unit, can have a detection device for detecting the spatial dimensions of the individual postal items. Preceding volume scanning can calculate a 3D model of the packages. Based on these data, the packages are then loaded into the respective suitable rack unit compartments. The automatic loading unit can be configured to rotate postal items, in particular around a vertical axis, in order to place them in a desired orientation in a designated rack unit compartment. The orientation of the postal items can be detected by sensors before being transferred to automatic loading unit.

The system can further comprise a transport unit for transporting the rack unit, which is configured to load the loaded rack unit from the handling area into a buffer zone or into a delivery vehicle. The system can further comprise a delivery vehicle having a load compartment configured to accommodate the rack unit. The delivery vehicle can be a van or a truck. The handling area can be regarded as the interface area between the delivery conveyor and the automatic loading unit and/or as an area that encompasses the radius of action of the automatic loading unit.

The sorting conveyor can be configured for providing the plurality of postal items in a predefined sorting sequence, wherein the system further comprises a control unit configured for controlling the sorting unit to generate the sorting sequence on the basis of at least one predefined sorting criterion. The sorting criterion can be an optimized delivery route of the delivery vehicle or an optimized loading scheme of the rack unit. Integration with route planning software can ensure that postal items are loaded in the order of their delivery sequence, reducing the time spent searching for parcels and optimizing delivery routes. It can further be provided that the controller can adjust the loading pattern based on real-time data, such as traffic conditions or last-minute delivery changes.

The system can further be configured for collecting data about loading times, package weights and volumes, which can be used for creating the sorting sequence.

Alternatively or in addition to providing the postal items in a predefined sorting sequence, the rack unit can be configured as smart rack unit with the position of the postal items being transmitted to the smart rack unit, which, for example, can use small lights to indicate the correct postal items to the driver, so he does not have to search for delivery.

The automatic loading unit can comprise one or more tilting trays and/or one or more crossbelt elements and/or one or more finger conveyors.

The automatic loading unit can have a load handling device configured for transferring the postal items from the load handling area into respective rack unit compartments of the rack unit. The load handling device can comprise a plurality of finger conveyors configured as retractable units. The automatic loading unit can further comprise detection means adapted to provide information about the rack unit respectively the available rack unit compartments and their individual dimensions. The automatic loading unit can further comprise a computer-implemented controller configured to control the retractable units. The retractable units can be configured to extend or retract in a longitudinal direction. This allows the retractable units to extend into the rack unit. The retractable units can be individually extendable. It can further be provided that two, or more, adjacent retractable units are adapted to retract and extend in unison. Each retractable unit can comprise a belt conveyor by means of which postal items can be transported into the rack unit along the direction in which the retractable unit extends.

The computer-implemented controller can be configured for controlling the plurality of parallel retractable units so as to:
receive a postal item having a predetermined size and/or orientation;
determine a selected position in the rack unit to place the parcel at, based on the size and/or the orientation of said postal item and the information from the detection means about the rack unit;
position one, or more, of the retractable units to be able to forward the parcel to an unloading position;
forward the postal item in the longitudinal direction to the unloading position, by:
   i. in a first mode, being adapted to extend only one retractable unit, or
   ii. in a second mode, being adapted to extend two, or more, retractable units, depending on the size and/or orientation of the postal item; and
unload the postal item from the unloading position to the selected position in the rack unit.

The system can further comprise a rack-operating robot configured to automatically transport the automatic loading unit between the delivery conveyor and a rack unit compartment of the rack unit. Track-operating robot can be height adjustable and/or movable sideways along a longitudinal side of the rack unit. The system can have one rack operation robot per automatic loading unit. For example, during the loading process, the rack unit can be arranged between the two rack operating robots, with each rack operating robot carrying an automatic loading unit.

The rack unit can be located outside of a delivery vehicle during the loading process. Alternatively, the rack unit can be located in a delivery vehicle during loading, which is configured to be loaded from the outside with the rack unit compartments being accessible from the outside. For this purpose, the delivery vehicle can, for example, have openable longitudinal side walls, e.g. realized by roller blinds etc., or the delivery vehicle can have a removable tarpaulin.

It can be provided that the rack is automatically loaded into a delivery vehicle after the rack unit has been loaded with postal items.

The sorting conveyor can be is a crossbelt sorter or a pouch conveyor, the pouch conveyor having pouches configured for receiving individual postal items. The delivery conveyor can be a horizontal conveyor. The delivery conveyor can comprise roller conveyor elements and/or belt conveyor elements. The sorting conveyor can be configured to unload the postal items onto the horizontal conveyor at the interface.

The present invention further refers to a method for automatic loading of postal items into a rack unit of a delivery vehicle, for example using the system according to one of the preceding claims, comprising the steps:
- providing a plurality of postal items, e.g. parcels and/or packages, intended for a delivery run of a delivery vehicle;
- delivering the plurality of postal items to a handling area of a rack unit configured to be accommodated in a loading space of a delivery vehicle;
- automatically loading the postal items into rack unit compartments of the rack unit.

The postal items can be ejected from a sorting conveyor to the handling area with a delivery conveyor comprising conveyor belts and/or roller conveyors. From the handling area, the postal items are transported to an automatic loading unit having and handed over. The automatic loading unit can have a load handling device onto which the postal item is transferred. The handling device can be configured to place the postal items in a desired rack unit compartment.

It can be provided that the rack unit is located outside of a delivery vehicle during the loading process.

The method can further comprise the step of loading the rack unit into a delivery vehicle.

It is conceivable that the provision of the postal items is carried out by a sorting conveyor, and wherein the delivering of the postal items is carried out by a delivery conveyor, wherein the method further comprises the step:
- transferring the postal items from the sorting conveyor to the delivery conveyor.

Additional details of the invention are explained with reference to the figures below, in which:
Fig. 1 shows a perspective side view of the system for automatic loading of postal items;
Fig. 2 shows a perspective frontal view of the system for automatic loading of postal items.

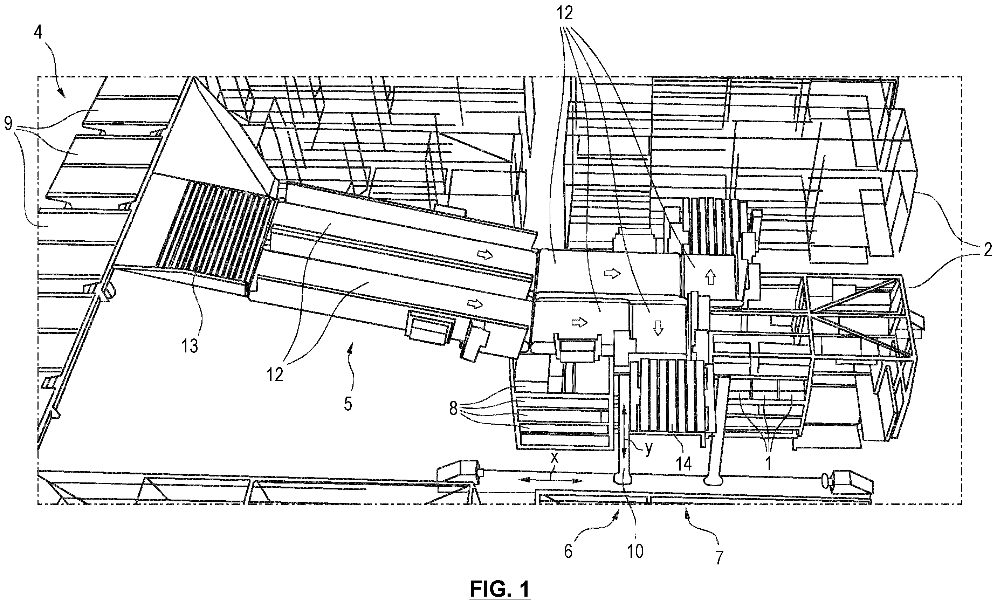

The system for automatically loading a rack unit shown in Fig. 1 has a sorting conveyor 4 with a plurality of crossbelt conveyor elements 9, which can be used to discharge postal items 1 to an input side of a delivery conveyor 5 at an interface between the sorting conveyor 4 and the delivery conveyor 5. In this way, the entirety of the postal items 1 intended for a delivery run of a delivery vehicle 3 or the entirety of the postal items 1 to be loaded into the waiting rack unit 2 is gradually transferred from the sorting conveyor 4 to the delivery conveyor 5. From the delivery conveyor 5, the postal items 1 are transferred to two automatic loading units 7, which are arranged on opposite long sides of the rack unit 2. The automatic loading unit 7 takes the postal items 1 from the delivery conveyor 5 and then loads the postal items 1 in the desired orientation into the compartments 8 of the rack unit 2 in the sequence intended for delivery of the postal items 1. The delivery conveyor 5 has a first ramp-like section 11, which consists of a roller conveyor 13 and an adjoining belt conveyor 12. In the first section 11, the postal items 1 are conveyed from the sorting conveyor 4 towards the rack unit 2. A second section, which adjoins the first section 11 downstream, extends above the rack unit 2, whereby the second section is also formed from belt conveyors 12 and extends to approximately the middle of the longitudinal sides of the rack unit 2. This is adjoined by belt conveyor elements 12 extending perpendicularly thereto, by means of which the postal items 1 are conveyed in the direction of the sides of the rack unit 2 located below. There, the postal items are transferred to the load handling devices or, as shown, to the multi-track conveyors 14 of the opposite automatic loading units 7. The multi-track conveyor 14 is held by a rack-operating robot 10, which can be moved laterally along the long side in the X direction and in the Y height direction of the rack unit 2.

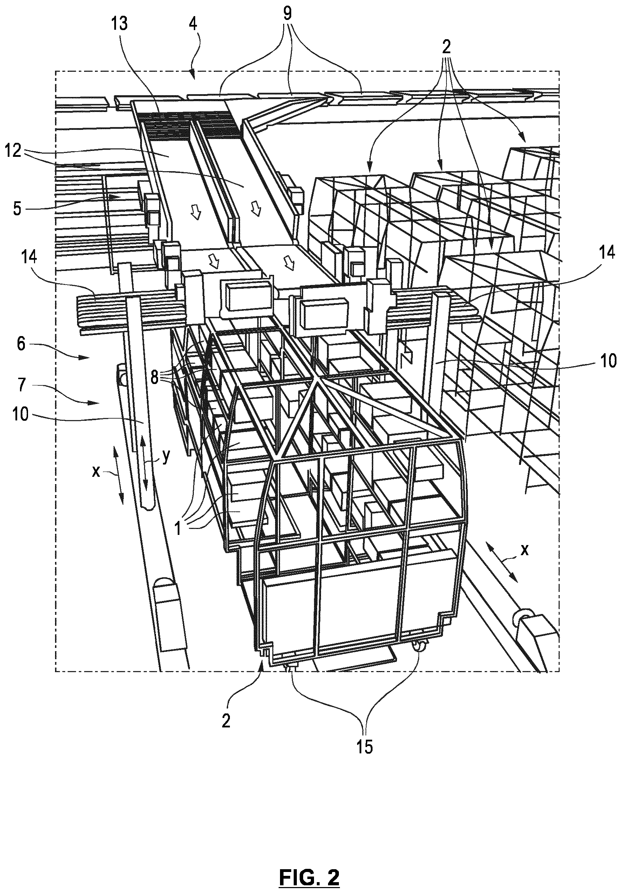

Fig. 2 shows a frontal view of the automatic loading system. After the postal items 1 have passed through the ramp-like sections 13 and 12, they are discharged laterally in the direction of the multi-track conveyors 14. As they pass over, the postal items 1 are detected by sensors that determine the spatial dimensions of the postal items 1 so that the controller for controlling the automatic loading unit 7 can determine in which free space of the compartments 8 of the rack unit 2 the postal item 1 can be placed. The multi-track conveyor 14 is configured to rotate the postal items into the correct orientation so that optimum space utilization of rack unit 2 is achieved. The rack unit 2 has a plurality of rollers 15 so that it can be moved out of the handling area 6 after being loaded with postal items 1 in order to either store the rack unit 2 temporarily in a buffer zone or load it directly into the loading space of a waiting delivery vehicle 3.

The features of the invention disclosed in the preceding description, in the drawings and in the claims may be essential for the implementation of the invention, both alone as well as in arbitrary combination.

### List of reference numerals

- 1: Postal item
- 2: Rack unit
- 3: Delivery vehicle
- 4: Sorting conveyor
- 5: Delivery conveyor
- 6: Handling area
- 7: Automatic loading unit
- 8: Rack unit compartments
- 9: Crossbelt element
- 10: Rack-operating robot
- 11: Ramp
- 12: Belt conveyor
- 13: Roller conveyor
- 14: Multi track conveyor
- 15: Rollers

## Claims

1. System for automatic loading of postal items (1) into a rack unit (2) of a delivery vehicle (3), comprising:
- a sorting conveyor (4) configured for providing a plurality of postal items (1), e.g. parcels and/or packages, intended for a delivery run of a delivery vehicle (3);
- at least one delivery conveyor (5) for delivering the postal items (1) from the sorting conveyor (4) to a handling area (6) of a rack unit (2) configured to be accommodated in a loading space of a delivery vehicle (3);
- at least one automatic loading unit (7) configured to load postal items (1) from the handling area (6) into rack unit compartments (8) of the rack unit (2).

2. System according to claim 1, wherein the sorting conveyor (4) is configured for providing the plurality of postal items (1) in a predefined sorting sequence, wherein the system further comprises a control unit configured for controlling the sorting unit (4) to generate the sorting sequence on the basis of at least one predefined sorting criterion.

3. The system according to claim 2, wherein the sorting criterion is an optimized delivery route of the delivery vehicle (3) or an optimized loading scheme of the rack unit (2).

4. The system according to any one of the preceding claims, wherein the sorting conveyor (4) and the delivery conveyor (5) have an interface for transferring the postal items (1).

5. The system according to one of the preceding claims, wherein the automatic loading unit (7) comprises one or more tilting trays and/or one or more crossbelt elements (9) and/or one or more finger conveyors.

6. The system according to claim 5, wherein the automatic loading unit (7) comprises a plurality of finger conveyors configured as retractable units, detection means adapted to provide information about the rack unit (2), and a computer-implemented controller configured to control the retractable units, each retractable unit adapted to extend or retract in a longitudinal direction, the retractable units being individually extendable, two, or more, adjacent retractable units are adapted to retract and extend in unison.

7. The system according to claim 6, wherein the controller is configured for controlling the plurality of parallel retractable units so as to:
receive a postal item (1) having a predetermined size and/or orientation;
determine a selected position in the rack unit (2) to place the postal item (1) at, based on the size and/or the orientation of said postal item (1) and the information from the detection means about the rack unit (2);
position one, or more, of the retractable units to be able to forward the postal item (1) to an unloading position;
forward the postal item (1) in the longitudinal direction to the unloading position, by:
i. in a first mode, being adapted to extend only one retractable unit, or
ii. in a second mode, being adapted to extend two, or more, retractable units, depending on the size and/or orientation of the postal item (1); and
unload the postal item (1) from the unloading position to the selected position in the rack unit (2).

8. System according to one of the preceding claims, further comprising a rack-operating robot (10) configured to automatically transport the automatic loading unit (7) between the delivery conveyor (5) and a rack unit compartment (8) of the rack unit (2).

9. System according to claim 8, wherein the rack-operating robot (10) is height adjustable and/or movable sideways along a front of the rack unit (2).

10. The system according to one of the preceding claims, wherein the rack unit (2) is located outside of a delivery vehicle (3) during the loading process.

11. The system according to any one of the preceding claims, wherein the sorting conveyor (4) is a crossbelt sorter or a pouch conveyor, the pouch conveyor having pouches configured for receiving individual postal items.

12. The system according to any one of the preceding claims, wherein the delivery conveyor (5) is a horizontal conveyor.

13. The system according to claim 12, wherein the sorting conveyor (4) is configured to unload the postal items (1) onto the horizontal delivery conveyor (5) at the interface.

14. Method for automatic loading of postal items (1) into a rack unit (2) of a delivery vehicle (3), for example using the system according to one of the preceding claims, comprising the steps:
- providing a plurality of postal items (1), e.g. parcels and/or packages, intended for a delivery run of a delivery vehicle (3);
- delivering the plurality of postal items (1) to a handling area (6) of a rack unit (2) configured to be accommodated in a loading space of a delivery vehicle (3);
- automatically loading the postal items (1) into rack unit compartments (8) of the rack unit (8).

15. The method according to claim 14, further comprising the step:
- loading the rack unit (2) into a delivery vehicle (3).

16. The method according to one of the claims 13 or 14, wherein the provision of the postal items (1) is carried out by a sorting conveyor (4), and wherein the delivering of the postal items (1) is carried out by a delivery conveyor (5), wherein the method further comprises the step:
- transferring the postal items (1) from the sorting conveyor (4) to the delivery conveyor (5).
